# EUROPEAN PATENT APPLICATION

(11) **EP 3 169 075 A1**
(43) Date of publication of application: **17.05.2017**
(21) Application number: 16753811.5
(22) Date of filing: 13.05.2016
(51) Int. Cl.: H04N 21/41, H04N 21/426, H04N 21/4402, H04N 21/431, H04N 21/4363, H04N 21/462, H04N 7/01, H04N 5/445, H04N 21/485

(54) **AUDIO AND VIDEO PLAYBACK DEVICE**

(30) Priority: 21.08.2015 CN 201510521960
(71) Applicant: LE Holdings (Beijing) Co., Ltd., Beijing 100025 (CN); Le Shi Zhi Xin Electronic Technology (Tianjin) Limited, Beijing 100025 (CN)
(72) Inventor: LIU, Wei, Beijing 100025 (CN)
(74) Representative: Lahrtz, Fritz
(86) International application number: PCT/CN2016/082039
(87) International publication number: WO 2017/032071

(57) **Abstract**

The embodiments of the present invention provides an audio and video player, including a processor, a video format conversion bridge chip, a data conversion chip and a motion compensation frame rate converter, wherein the processor is provided with an on screen display menu (on screen display) function module , is configured to produce on screen display menu data; the video format conversion bridge chip is configured to receive external video signal from an external signal source and convert the data format of the external video signals, and then process the external video signals into high resolution and high frame rate video signals through the motion compensation frame rate converter; while the data conversion chip is configured to transmit the on screen display menu data transmitted by the processor to the motion compensation frame rate converter to overlay, thus presenting the high resolution and high frame rate video signals having on screen display menu data on a display screen, and enabling the audio and video player to both have high definition pictures and the function of being suitable for executing large-scale software, so as to improve the user experience and willingness to use.

## Description

This application claims priority to Chinese Patent Application No.201510521960.7, titled "Audio and Video Player" and filed August 21, 2015 at the State Intellectual Property Office of The P.R.C, the entire contents of which are incorporated herein by reference.

### TECHNICAL FIELD

The present invention relates to the field of multimedia technologies, and, more particularly, to an audio and video player.

### BACKGROUND

For a solution employed to execute audio and video playing functions, current audio and video players (such as a smart TV) can only meet the use demand of playing a video or playing a small game since the processing capacity of a processor thereof is lower. However, for the use demand of executing large-scale games, its processing capacity for large games are far insufficient. Therefore, if gamers want to execute operations of large-scale games through a general audio and video player, it is required to purchase an additional game machine to execute, such as Microsoft XBOX ONE or Sony PS4 for playing the large-scale games on a smart TV.

Therefore, the current audio and video player cannot comply with the use demand for one machine multi-purpose, and additional equipment is needed, which merely increases the cost, thus resulting in poor user experience so as to reduce their willingness to use the audio and video player.

### SUMMARY

The present invention provides an audio and video player which is configured to solve the problems in the related art that the use demand for one machine multi-purpose cannot be satisfied, which results in poor user experience and the willingness to use the audio and video player is reduced.

The present invention provides an audio and video player, including a processor, a video format conversion bridge chip, a data conversion chip and a motion compensation frame rate converter, wherein the processor provided with an on screen display menu function module, is configured to produce on screen display menu data; the video format conversion bridge chip , coupled to the processor and an external signal source respectively, is configured to receive and convert the data format of external video signals from the external signal source, and transmit the converted external video signals to the motion compensation frame rate converter; the data conversion chip, coupled to the processor and the motion compensation frame rate converter respectively, is configured to receive the on screen display menu data from the processor and transmit the on screen display menu data to the motion compensation frame rate converter when the video format conversion bridge chip receives the external video signals, and optionally convert the data format of the on screen display menu data; and the motion compensation frame rate converter, coupled between the video format conversion bridge chip and a display screen, is configured to overlay the converted external video signals and the on screen display menu data received and transmit to the display screen.

According to the audio and video player provided by the present invention, such as a smart TV, the video signals received by the audio and video player are suitable to be played on the display screen and on screen display menu can be presented synchronously through the configuration of the high-performance processor having performance indexes apparently higher than that of a general processor, converting the data format of the main video signals and the external video signal by the video format conversion bridge chip, serving the data conversion chip as a medium for transmitting the on screen display menu data and the main video signals and capable of converting the data format of the on screen display menu data, and processing the main video signals and the external video signals into the high resolution and high frame rate video signals overlaid with the on screen display menu data by the motion compensation frame rate converter, so that the audio and video player not only has the efficacy of executing high power consumption software, but also can provide a function for viewing high-quality videos at the same time. Therefore, for the aspect of use, the audio and video player enables users to view high-quality videos, and can also meet the use demand for executing large-scale games at the same time, so that the entire audio-visual entertainment efficacy of the audio and video player is enhanced, the user experience is substantially improved, and the cost for additionally purchasing a game machine is saved.

### BRIEF DESCRIPTION OF THE DRAWINGS

Fig. 1 is a block diagram of a first embodiment of an audio and video player according to the present invention;
Fig. 2 is a block diagram of a second embodiment of the audio and video player according to the present invention; and
Fig. 3 is a block diagram of a third embodiment of the audio and video player according to the present invention.

### DETAILED DESCRIPTION

To make the objects, technical solutions and advantages of the embodiments of the present invention more clearly, the technical solutions of the present invention will be clearly and completely described hereinafter with reference to the embodiments and drawings of the present invention. Apparently, the embodiments described are merely partial embodiments of the present invention, rather than all embodiments. Other embodiments derived by those having ordinary skills in the art on the basis of the embodiments of the invention without going through creative efforts shall all fall within the protection scope of the present invention.

The audio and video player and/or audio and video output equipment disclosed by the embodiments of the present invention is configured to transmit the video signals to the display screen, wherein the audio and video player may be, but is not limited to a TV set, such as a smart TV, while the audio and video output equipment may be such a video and audio apparatus like a DVD player or a set top box externally connected to the audio and video player. The above is exemplary and explanatory only, and is not intended for limitation.

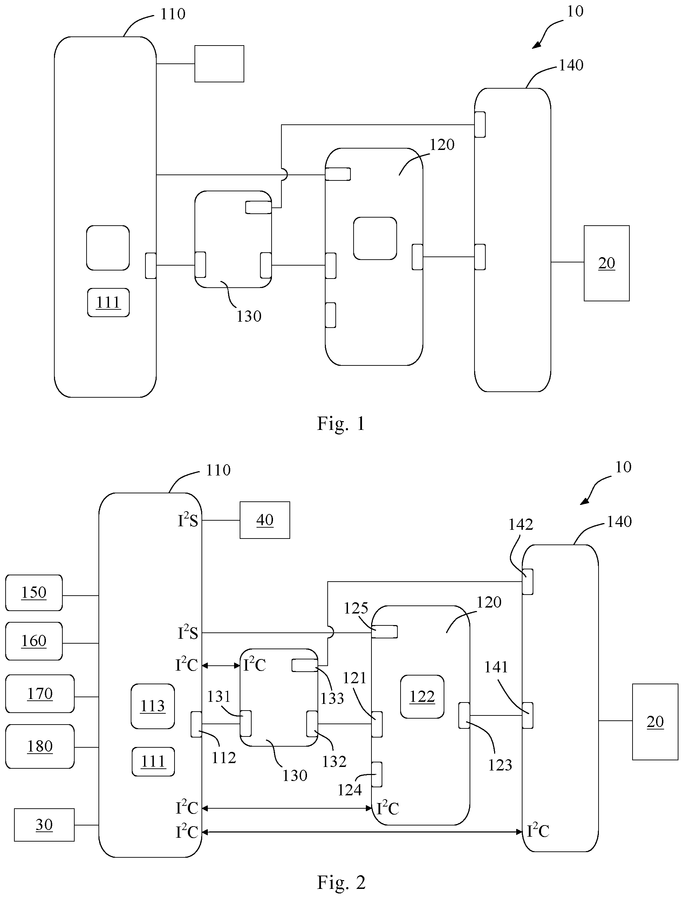

As shown in Fig. 1, a first embodiment disclosed by the present invention provides an audio and video player 10, which includes a processor 110, a video format conversion bridge chip 120, a data conversion chip 130 and a motion compensation frame rate converter 140.

The processor 110 is provided with an on screen display menu function module 111 , which is configured to produce on screen display menu data. The video format conversion bridge chip 120, which is coupled to the processor 110 and an external signal source respectively, is configured to receive and convert the data format of external video signals from the external signal source, and transmit the converted external video signals to the motion compensation frame rate converter 140, wherein the external signal source may be such a video and audio device like a DVD player or a set top box externally connected to the audio and video player, but is not limited to this. The data conversion chip 130, coupled to the processor 110 and the motion compensation frame rate converter 140 respectively, is configured to receive the on screen display menu data from the processor and transmitting the on screen display menu data to the motion compensation frame rate converter 140 when the video format conversion bridge chip 130 receives the external video signals, and optionally converting the data format of the on screen display menu data. While the motion compensation frame rate converter 140, coupled between the video format conversion bridge chip 120 and a display screen 20, is configured to overlay the converted external video signals received with the on screen display menu data, and transmit the converted external video signals and the on screen display menu data to the display screen 20, wherein the display screen 20 may be a part of components of the audio and video player 10, or a display device externally connected to the audio and video player 10.

During detailed implementation, when the audio and video player 10 receives the audio and video signals of an external signal source such as an audio and video output equipment like a DVD player or a set top box, the data format of the video signals therein (i.e., the external video signals from the external signal source) is converted by the video format conversion bridge chip 120, for example, converted from data format HDMI to data format V-by-One, so that the data format complies with the receiving format of the motion compensation frame rate converter 140, and then the converted external video signals are transmitted to the motion compensation frame rate converter 140, to facilitate conducting high resolution and/or high frame rate processing. For example, if the resolution of the external video signals is maximum resolution, resolution processing is not conducted in this case; on the contrary, the resolution of the video signals is processed into maximum resolution if the resolution is not maximum resolution. For example, when the inputted external video signals have 4K*2K resolution, then the video signals are not processed; if the inputted external video signals have 1080P resolution only, then the external video signals are processed to have 4K*2K resolution.

At this moment, during the process of transmitting the external video signals from the video format conversion bridge chip 120 to the motion compensation frame rate converter 140, if the processor 110 receives an external operation instruction to produce corresponding on screen display menu data through the on screen display menu function module 111 , the on screen display menu data is transmitted to the data conversion chip 130 through the processor 110 and the data format is converted in the data conversion chip 130, so that the data format thereof is converted into the data format that can be received by the motion compensation frame rate converter 140, and then the on screen display menu data is transmitted to the motion compensation frame rate converter 140 through the data conversion chip 130. It is to be understood that if the initial data format of the on screen display menu data is consistent with the data format that can be received by the motion compensation frame rate converter 140, the operation of converting the data format can be omitted.

Then, the motion compensation frame rate converter 140 can namely overlay the received on screen display menu data with the external video signals; or overlay the received on screen display menu data with the external video signals which are processed into high resolution and high frame rate video signals already, and then transmit the signals to the display screen 20.

Therefore, in the audio and video player provided by the embodiment of the present invention, the audio and video player is enabled to possess the ability of processing large-scale software, for example, large-scale games or other high power consumption software, through receiving the audio and video signals from the external signal source by the video format conversion bridge chip and configuring the processor having performance indexes apparently higher than that of a general processor. Moreover, the external video signals received by the video format conversion bridge chip can be played on the display screen and the on screen display menu data can be presented at the same time by converting the data format of the video signals by the video format conversion bridge chip and using the data conversion chip as the medium for transmitting the on screen display menu data and the main video signals. Moreover, high resolution and high frame rate video signals may be provided to the display screen through optimizing the converted video signals by the motion compensation frame rate converter, thus improving the quality of the display picture, and increasing the user experience at the same time.

Please refer to Fig. 2. An audio and video player 10 disclosed by a second embodiment of the present invention is coupled with a main signal source 30, an audio system 40 and a display screen 20. In addition, the audio and video player 10 disclosed by the embodiment of the present invention may also be externally connected with such an audio and video output equipment like a DVD player or a set top box, and use the audio and video output equipment as an external signal source to receive audio and video signals from these externally connected video and audio devices. Wherein, the main signal source 30 may be, but is not limited to a TV signal source, a signal source from internet or a signal source downloaded from a local end, while the external signal source is the foregoing audio and video signal source of the video and audio device externally connected to the audio and video player. Moreover, in the embodiment of the present invention, the audio system 40 and the display screen 20 may be, but are not limited to multimedia devices self-provided by the audio and video player 10, or multimedia devices externally connected to the audio and video player 10 in a detachable form.

The audio and video player 10 includes a processor 110, a video format conversion bridge chip 120, a data conversion chip 130 and a motion compensation frame rate converter 140, wherein the processor 110 is coupled to the video format conversion bridge chip 120, the data conversion chip 130 and the motion compensation frame rate converter 140 respectively through an I2C (Inter-Integrated Circuit, inter-integrated circuit) bus. Moreover, the audio and video player 10 is also internally configured with one of an Ethernet module 150, a wired and/or wireless communication module 160 (such as a bluetooth module, a wifi module, a 2.4G communication module, or the like), a power management module 170, a memory module 180 and combinations thereof which are coupled to the processor 110 respectively.

In the present invention, the processor 110 is a processor having a master frequency and a register bit higher than that of a general processor. For example, if the general processor has 32 bits and a master frequency of 1.2GHz, then the processor 110 may be a 64-bit processor having a master frequency of 2~2.5GHz, wherein this is a relative value, and any processor having performance indexes apparently higher than that of a general processor (i.e., so-called high- performance processor) is applicable to be served as the processor 110 of the audio and video player 10 in the embodiment of the present invention.

The processor 110 is coupled to the main signal source 30 of the audio and video player 10 and is coupled to the audio system 40 through an I2S (Inter-IC Sound) audio bus (also called as integrated circuit built-in audio bus). The processor 110 is configured to receive the audio and video signals of the main signal source 30, for example, the audio and video signals transmitted to the processor 110 of the system from one of the Ethernet module 150 and the wired/wireless communication module 160 configured in the audio and video player 10, or the audio and video data read by the processor 110 from the memory module 180. Moreover, the processor 110 is also configured to transmit the audio signals in the received audio and video signals (i.e., the main audio signals from the main signal source 30) to the audio system 40 and transmit the video signals in the audio and video signals (i.e., the main video signals from the main signal source 30) to the video format conversion bridge chip 120. Wherein, the main signal source 30 may include, but is not limited to a TV signal source, a signal source from internet or a signal source downloaded from a local end, for example, the main signal source 30 includes: audio and video signals received by such wireless or wired communication modes like the Ethernet module 150 or the wired and/or wireless communication module 160; or audio and video data directly read from the memory module 180, and audio and video signals directly provided by the audio and video player 10 itself.

Furthermore, a first video format output interface 112, a processing module 113 and an on screen display menu (on screen display) function module 111 are electrically set on the processor 110. Wherein, the processing module 113 includes a central processing unit (central processing unit, CPU) 112 and/or a graphic processing unit (graphic processing unit, GPU). While the first video format output interface 112 may be, but is not limited to one of a mobile high-definition video-audio standard interface (mobile high-definition link, MHL; referred to as MHL interface), an HDMI interface, a low voltage differential signaling (Low Voltage Differential Signaling, LVDS) interface, a DP interface (display port), an EDP interface (Embedded Display Port), an MIPI DSI interface (Mobile Industry Processor Interface-Display Serial Interface, mobile industry processor and display serial interface), a logic gate circuit interface (Transistor-Transistor Logic, TTL; referred to as TTL interface) and combinations thereof, and the processor 110 is namely coupled to the corresponding interface on the second video format conversion bridge chip 120 through the first video format output interface 112.

The on screen display menu function module 111 is configured to produce corresponding on screen display menu data according to an operation instruction received by the processor 110. For example, in a scenario of needing to use a menu, the processor 110 controls the on screen display menu function module 111 to produce on screen display menu data according to an external input instruction, for example, in the scenario that the audio and video player 10 of the present invention is a TV set, a function instruction requesting for displaying a control menu is transmitted to the processor 110 through a remote controller, then the processing module 113 of the processor 110 namely notifies the on screen display menu function module 111 to produce corresponding on screen display menu data according to the function instruction, and transmits the on screen display menu data to the data conversion chip 130; or, the processor 110 overlays the on screen display menu data with the main video signals, and then transmits the main video signals overlaid with the on screen display menu data to the data conversion chip 130.

A first video format input interface 121, a micro control unit (micro control unit, MCU) 122, a second video format output interface 123, an external audio and video input interface 124 and an audio output interface 125 are electrically set on the video format conversion bridge chip 120. The first video format input interface 121, coupled to the first video format output interface 112 of the processor 110 is configured to receive the main video signals from the main signal source 30 or the main video signals overlaid with the on screen display menu data from the processor 110; and the on screen display menu data. While the second video format output interface 123, coupled to a second video format input interface 141 which is electrically set on the motion compensation frame rate converter 140, is configured to transmit the converted main video signals or the converted external video signal to the motion compensation frame rate converter 140 after the video format conversion bridge chip 120 converts the data format of the main video signals, the overlaid main video signals (i.e., the main video signals overlaid with the on screen display menu data) or the external video signal from an external signal source 50.

Wherein, the data format of the first video format input interface 121 is the same as the data format of the first video format output interface 112 of the processor 110, for example, both of the two are data format HDMI; the data format of the second video format output interface 123 of the video format conversion bridge chip 120 is different from the data format of the first video format output interface 112 of the processor 110, for example, the data format is V-by-One. It is to be understood that because the second video format output interface 123 of the video format conversion bridge chip 120 and the second video format input interface 141 of the motion compensation frame rate converter 140 are a video signal output interface and a video signal input interface with corresponding data format, the data format of the second video format input interface 141 of the motion compensation frame rate converter 140 in the embodiment is also data format V-by-One.

The external audio and video input interface 124 of the video format conversion bridge chip 120 is configured to be coupled to the external signal source 50 of such an audio and video output equipment like a DVD player or a set top box, to facilitate receiving the external audio and video signals which include external audio signals and external video signals from the external signal source from the audio and video output equipment. Therefore, the data format of the external audio and video input interface 124 may be, but is not limited to such data format like an MHL interface, an HDMI interface, an LVDS interface, a DP interface, an EDP interface or an MIPI DSI interface or a TTL interface, or the combinations of the foregoing data formats. While the audio output interface 125 , coupled to the processor 110 through an I2S bus, is configured to transmit the converted external audio signals to the processor 110 after the format of the external audio signals received is converted by the video format conversion bridge chip 120, to facilitate providing the audio signals to the audio system 40 to play. For example, after the external audio signals in data format HDMI are converted into the external audio signal in data format I2S, the signals are transmitted to the processor 110 through an data format I2S bus; or in some cases, the external audio signals in HDMI are firstly converted into data format SPDIF, then converted into data format I2S from data format SPDIF, and then transmitted to the processor 110.

The data conversion chip 130, coupled to the processor 110, the video format conversion bridge chip 120 and the motion compensation frame rate converter 140 respectively, is configured to receive the on screen display menu data produced by the on screen display menu function module 111 from the processor 110 when the audio and video signals are provided to the video format conversion bridge chip 120 by a multimedia device (such as a DVD player or a set top box, or the like) externally connected to the audio and video player 10, and optionally converting the data format of the on screen display menu data according to that whether the format of an interface arranged at a transmitting end (processor 110) is compatible with the format of an interface arranged at a receiving end (motion compensation frame rate converter 140), and then transmitting the converted on screen display menu data to the motion compensation frame rate converter 140.

Wherein, a signal input interface 131, a signal output interface 132 and an on screen menu output interface 133 are electrically set on the data conversion chip 130, and a menu data input interface 142 is electrically set on the motion compensation frame rate converter 140. The data formats of the signal input interface 131 and the signal output interface 132 are the same as the data formats of the first video format output interface 112 of the processor 110 and the first video format input interface 121 of the video format conversion bridge chip 120 respectively, for example, all the data formats are HDMI. The signal input interface 131, coupled to the first video format output interface 112 of the processor 110, is configured to receive the main video signals from the main signal source 30 or the main video signals overlaid with the on screen display menu data from the processor 110; and receive the on screen display menu data produced by the on screen display menu function module 111 from the processor 110. The signal output interface 132, coupled to the first video format input interface 121 of the video format conversion bridge chip 120, is configured to transmit the main video signals or the main video signals already overlaid with the on screen display menu data to the video format conversion bridge chip 120.

Moreover, the signal input interface 131 and the on screen menu output interface 133 of the data conversion chip 130 may either be interfaces with mutually corresponding data formats or with different data formats; wherein, if the data format of the signal input interface 131 is different from that of the on screen menu output interface 133, then the data format of the on screen display menu data is further converted after the data conversion chip 130 receives the on screen display menu data, so that the data format of the on screen display menu data is consistent with the transmission format of the on screen menu output interface 133, to facilitate transmitting the on screen display menu data after format conversion to the motion compensation frame rate converter 140. Therefore, the data format of the menu data input interface 142 of the motion compensation frame rate converter 140 is the same as the data format of the on screen menu output interface 133 of the data conversion chip 130, to facilitate receiving the on screen display menu data from the data conversion chip 130.

The motion compensation frame rate converter 140, coupled to the video format conversion bridge chip 120, the data conversion chip 130 and the display screen 20 respectively, is configured to receive the converted main video signals or the converted external video signals from the video format conversion bridge chip 120, and conduct frame rate conversion (frame rate conversion, FRC) on the converted main video signals or the converted external video signals based on motion estimation and motion compensation (motion estimation and motion compensation, MEMC) principle, so as to process the converted main video signals or the converted external video signals into high resolution and high frame rate video signals, for example, to improve the video contents with a common refresh rate of 60Hz to video contents with a refresh rate of 120Hz or 240Hz, and then transmit the high resolution and high frame rate video signals to the display screen 20 to play, thus improving the definition of motion pictures.

It should be illustrated that the motion compensation frame rate converter 140 is also configured to receive the on screen display menu data from the data conversion chip 130 and overlay the on screen display menu data received with the converted external video signals. Moreover, for the overlaying operation, the on screen display menu data may be overlaid with the converted external video signals firstly, and then the external video signals overlaid with the on screen display menu data are processed into high resolution and high frame rate video signals; or, after the converted external video signals are processed into high resolution and high frame rate video signals, the on screen display menu data is overlaid. The above are only different sequences of the overlaying operations, and can both present high definition pictures with on screen display menu data on the display screen 20; therefore, the above overlaying sequences are not intended to limit the present invention.

The operation mode of the audio and video player 10 disclosed by the embodiment of the present invention will be illustrated hereinafter through a specific implementation manner.

After receiving the audio and video signals from the main signal source 30, the processor 110 of the audio and video player 10 transmits the main audio signals from the main signal source 30 to the audio system 40 through an I2S audio bus; and transmits the main video signals from the main signal source to the data conversion chip 130 through the first video format output interface 112. During this process, the processor 110 may also produce corresponding on screen display menu data through the on screen display menu function module 111 according to the external operation instruction received, and overlay the on screen display menu data with the main video signals, then transmit the main video signals overlaid with the on screen display menu data to the data conversion chip 130; or transmit the on screen display menu data to the data conversion chip 130 separately. Moreover, during the process of transmitting the main video signals, the processor 110 optionally converts the data format of the video signals into a data format suitable for the first video format output interface 112 according to actual demands, such as HDMI, and then transmits to the data conversion chip 130 through the first video format output interface 112.

The data conversion chip 130 receives the main video signals or the overlaid main video signals through the signal input interface 131, and then transmits the signals to the video format conversion bridge chip 120 through the signal output interface 132. While the video format conversion bridge chip 120 receives the foregoing main video signals or the overlaid main video signals through the first video format input interface 121, and converts the data format of the signals, for example, from data format HDMI to data format V-by-One, and then transmits the converted main video signals to the motion compensation frame rate converter 140 through the second video format output interface 123.

Next, after receiving the converted main video signals through the second video format input interface 141, the motion compensation frame rate converter 140 conducts motion estimation, motion compensation and frame rate conversion on the converted main video signals, so that the converted main video signals are processed into high resolution and high frame rate video signals. Then, the high resolution and high frame rate video signals are transmitted to the display screen 20 to play, thus presenting high definition pictures on the display screen 20.

Furthermore, when the audio and video signals inputted into the audio and video player 10 are from an external signal source of such an audio and video output equipment like a DVD player or a set top box, the external signal source is coupled to the video format conversion bridge chip 120 through the external audio and video input interface 124, to facilitate transmitting the external audio and video signals to the video format conversion bridge chip 120 through the external audio and video input interface 124.

Next, the external audio signals from the external signal source are transmitted to the processor 110 through the audio output interface 125 of the video format conversion bridge chip 120, and then provided to the audio system 40 to play through the processor 110. While the data format of the external video signals from the external signal source (i.e., the video signals in the audio and video signals of the external signal source) is converted through the video format conversion bridge chip 120, for example, converted into data format V-by-One from data format HDMI, so that the data format complies with the output format of the second video format output interface 123, and then the converted external video signals are transmitted to the motion compensation frame rate converter 140 through the second video format output interface 123, to facilitate conducting high resolution and/or high frame rate processing. For example, if the resolution of the external video signals are maximum resolution, resolution processing is not conducted in this case; on the contrary, the resolution of the video signals is processed into maximum resolution if the resolution is not maximum resolution. For example, when the inputted external video signals have 4K*2K resolution, then the video signals are not processed; if the inputted external video signals have 1080P resolution only, then the external video signals are processed to have 4K*2K resolution.

At this moment, during the process of transmitting the external video signals from the video format conversion bridge chip 120 to the motion compensation frame rate converter 140, if the processor 110 receives an external operation instruction to produce corresponding on screen display menu data through the on screen display menu function module 111 , the on screen display menu data is transmitted to the data conversion chip 130 through the first video format output interface 112 of the processor 110 and the data format thereof is converted in the data conversion chip 130, so that the data format of the on screen display menu data is converted into the data format that can be received by the menu data input interface 142 of the motion compensation frame rate converter 140, and then the on screen display menu data is transmitted to the motion compensation frame rate converter 140 through a menu data output interface 133 of the data conversion chip 130. It is to be understood that if the initial data format of the on screen display menu data is consistent with the data format that can be received by the menu data input interface 142 of the motion compensation frame rate converter 140, the operation of converting the data format can be omitted.

Then, the motion compensation frame rate converter 140 can namely overlay the received on screen display menu data with the external video signals; or overlay the received on screen display menu data with the external video signals which are processed into high resolution and high frame rate video signals already, and then transmit the signals to the display screen 20.

Therefore, the audio and video player provided by the embodiment of the present invention may optionally receive the audio and video signals from the main signal source through the processor; or receive the audio and video signals from the external signal source through the video format conversion bridge chip, and select corresponding processing mode according to different signal sources. Meanwhile, in the audio and video player provided by the embodiment of the present invention, the audio and video player is enabled to possess the ability of processing large-scale software, for example, large-scale games or other high power consumption software, through a manner of configuring the processor having performance indexes apparently higher than that of a general processor. Moreover, the external video signals received by the video format conversion bridge chip can be played on the display screen and the on screen display menu data can be presented at the same time by converting the data format of the video signals by the video format conversion bridge chip and using the data conversion chip as the medium for transmitting the on screen display menu data and the main video signals. Moreover, high resolution and high frame rate video signals may be provided to the display screen through optimizing the converted video signals by the motion compensation frame rate converter, thus improving the quality of the display picture, and increasing the user experience at the same time.

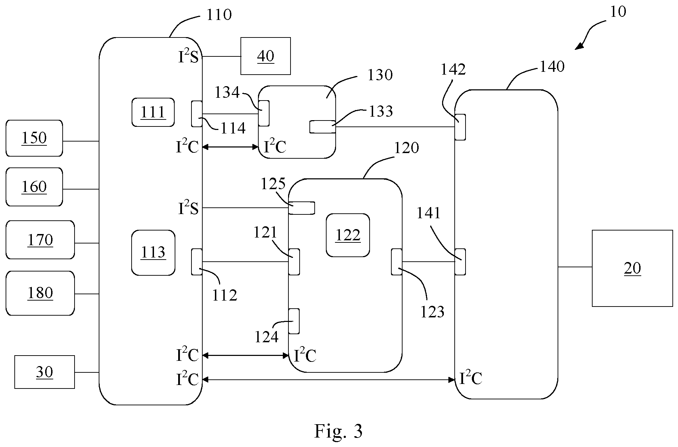

Please refer to Fig. 3. An audio and video player 10 disclosed by a third embodiment of the present invention includes a processor 110, a video format conversion bridge chip 120, a data conversion chip 130 and a motion compensation frame rate converter 140, wherein the processor 110 is coupled to the video format conversion bridge chip 120, the data conversion chip 130 and the motion compensation frame rate converter 140 respectively through an I2C (Inter-Integrated Circuit, inter-integrated circuit) bus. Moreover, the audio and video player 10 is also internally provided with one of an Ethernet module 150, a wired and/or wireless communication module 160 (such as a bluetooth module, a wifi module, a 2.4G communication module, or the like), a power management module 170, a memory module 180 and combinations thereof which are coupled to the processor 110 respectively.

In the present invention, the processor 110 is a processor having a master frequency and a register bit higher than that of a general processor. For example, if the general processor has 32 bits and a master frequency of 1.2GHz, then the processor 110 may be a 64-bit processor having a master frequency of 2~2.5GHz, wherein this is a relative value, and any processor having performance indexes apparently higher than that of a general processor (i.e., so-called high-efficiency processor) is applicable to be served as the processor 110 of the audio and video player 10 in the embodiment of the present invention.

The processor 110 is coupled to a main signal source 30 of the audio and video player 10 and is coupled to an audio system 40 through an I2S (Inter-IC Sound) audio bus (also called as integrated circuit built-in audio bus), is configured to receive audio and video signals of the main signal source 30, for example, audio and video signals transmitted to the processor 110 of the system from one of an Ethernet module 150 and a wired and/or wireless communication module 160 configured in the audio and video player 10, or audio and video data read by the processor 110 from a memory module 180. Moreover, the processor 110 is also configured to transmit the audio signals in the received audio and video signals to the audio system 40 and transmit the video signals in the audio and video signals to the video format conversion bridge chip 120. Wherein, the main signal source 30 includes: audio and video signals received by such wireless or wired communication modes like the Ethernet module 150 or the wired and/or wireless communication module 160; or audio and video data directly read from the memory module 180, and audio and video signals directly provided by the audio and video player 10 itself.

Furthermore, the processor 110 is electrically provided with a first video format output interface 112, a processing module 113, an on screen display menu (on screen display) function module 111, and a menu data output interface 111. Wherein, the processing module 113 includes a central processing unit (central processing unit, CPU) 112 and/or a graphic processing unit (graphic processing unit, GPU). While the first video format output interface 112 may be, but is not limited to one of a mobile high-definition video-audio standard interface (mobile high-definition link, MHL; referred to as MHL interface), an HDMI interface, a low voltage differential signaling (Low Voltage Differential Signaling, LVDS) interface, a DP interface (display port), an EDP interface (Embedded Display Port), an MIPI DSI interface (Mobile Industry Processor Interface-Display Serial Interface, mobile industry processor and display serial interface), a logic gate circuit interface (Transistor-Transistor Logic, TTL; referred to as TTL interface) and combinations thereof, and the processor 110 is namely coupled to the corresponding interface on the second video format conversion bridge chip 120 through the first video format output interface 112.

The on screen display menu function module 111 is configured to produce corresponding on screen display menu data according to an operation instruction received by the processor 110. For example, in a scenario of using a menu, the processor 110 controls the on screen display menu function module 111 to produce on screen display menu data according to an external input instruction, for example, in the scenario that the audio and video player 10 of the present invention is a TV set, a function instruction requesting for displaying a control menu is transmitted to the processor 110 through a remote controller, then the processing module 113 of the processor 110 namely notifies the on screen display menu function module 111 to produce corresponding on screen display menu data according to the function instruction, and transmits the on screen display menu data to the data conversion chip 130 through the menu data output interface 111; or, the processor 110 overlays the on screen display menu data with the main video signals, and then the main video signals overlaid with the on screen display menu data is transmitted to the video format conversion bridge chip 120 through the first video format output interface 112.

The video format conversion bridge chip 120 is electrically provided with a first video format input interface 121, a micro control unit (micro control unit, MCU) 122, a second video format output interface 123, an external audio and video input interface 124 and an audio output interface 125. The first video format input interface 121 is coupled to the first video format output interface 111 of the processor 110 is configured to receive the main video signals from the main signal source 30 from the processor 110. While the second video format output interface 123 is coupled to a second video format input interface 141 electrically arranged on the motion compensation frame rate converter 140 for transmitting the converted main video signals or the converted external video signal to the motion compensation frame rate converter 140 after the video format conversion bridge chip 120 converts the data format of the main video signals or external video signals from a main signal source 50.

Wherein, the data format of the first video format input interface 121 is the same as the data format of the first video format output interface 112 of the processor 110, for example, both of the two are HDMI; the data format of the second video format output interface 123 of the video format conversion bridge chip 120 is different from the data format of the first video format output interface 112 of the processor 110, for example, the data format is V-by-One. It is to be understood that because the second video format output interface 123 of the video format conversion bridge chip 120 and the second video format input interface 141 of the motion compensation frame rate converter 140 are a video signal output interface and a video signal input interface with corresponding data format, the data format of the second video format input interface 141 of the motion compensation frame rate converter 140 in the embodiment is also V-by-One.

The external audio and video input interface 124 of the video format conversion bridge chip 120 is configured to be coupled to the external signal source 50, for example, such an audio and video output equipment as a DVD player or set top box, to facilitate receiving the external audio and video signals from the audio and video output equipment. Therefore, the data format of the external audio and video input interface 124 may be, but is not limited to such data format like an MHL interface, an HDMI interface, an LVDS interface, a DP interface, an EDP interface or an MIPI DSI interface or a TTL interface, or the combinations of the foregoing data formats. While the audio output interface 125 is coupled to the processor 110 through an I2S bus for transmitting the converted external audio signals to the processor 110 after the format of the external audio signals from the external signal source 50 is converted by the video format conversion bridge chip 120, to facilitate providing the audio signals to the audio system 40 to play. For example, after the external audio signals in HDMI are converted into the external audio signal in I2S, the signals are transmitted to the processor 110 through an I2S bus; or in some cases, the external audio signals in HDMI are firstly converted into SPDIF, then converted into I2S from SPDIF, and then transmitted to the processor 110.

The data conversion chip 130, coupled to the processor 110, the video format conversion bridge chip 120 and the motion compensation frame rate converter 140 respectively, is configured to receive the on screen display menu data produced by the on screen display menu function module 111 from the processor 110 when the audio and video signals are provided to the video format conversion bridge chip 120 by a video and audio device (such as a DVD player or a set top box, or the like) externally connected to the audio and video player 10, and optionally converting the data format of the on screen display menu data according to that whether the format of an interface set at a transmitting end (processor 110) is compatible with the format of an interface arranged at a receiving end (motion compensation frame rate converter 140), and then transmitting the converted on screen display menu data to the motion compensation frame rate converter 140.

Wherein, an on screen menu output interface 133 and an on screen menu input interface 134 are electrically set on the data conversion chip 130, and a menu data input interface 142 is electrically set on the motion compensation frame rate converter 140. The on screen menu input interface 134 is coupled to the menu data output interface 111 of the processor 110, while the on screen menu output interface 133 is coupled to the menu data input interface 142 of the motion compensation frame rate converter 140. Moreover, the on screen menu input interface 134 and the on screen menu output interface 133 may either be interfaces with mutually corresponding data formats or with different data formats; wherein, if the data format of the on screen menu input interface 134 is different from that of the on screen menu output interface 133, then the data format of the on screen display menu data is further converted after the data conversion chip 130 receives the on screen display menu data, so that the data format of the on screen display menu data is consistent with the transmission format of the on screen menu output interface 133, to facilitate transmitting the on screen display menu data to the motion compensation frame rate converter 140. Therefore, the data format of the menu data input interface 142 of the motion compensation frame rate converter 140 is the same as the data format of the on screen menu output interface 133, to facilitate receiving the on screen display menu data from the data conversion chip 130.

The motion compensation frame rate converter 140, coupled to the video format conversion bridge chip 120, the data conversion chip 130 and the display screen 20 respectively, is configured to receive the on screen display menu data from the data conversion chip 130; and conduct frame rate conversion (frame rate conversion, FRC) on the converted main video signals or the converted external video signals based on motion estimation and motion compensation (motion estimation and motion compensation, MEMC) principle after receiving the converted main video signals or the converted external video signals from the video format conversion bridge chip 120, so as to process the converted main video signals or the converted external video signals into high resolution and high frame rate video signals, for example, to improve the video contents with a common refresh rate of 60Hz to video contents with a refresh rate of 120Hz or 240Hz, and then transmit the high resolution and high frame rate video signals to the display screen 20 to play, thus improving the definition of motion pictures.

It should be illustrated that the motion compensation frame rate converter 140 is also configured to overlay the on screen display menu data transmitted by the data conversion chip 130 with the converted external video signals or the converted main video signals. Moreover, for the overlaying operation, the on screen display menu data may be overlaid with the converted external video signals or the converted main video signals firstly, and then the external video signals or the main video signals overlaid with the on screen display menu data are processed into high resolution and high frame rate video signals; or, after the converted external video signals or the converted main video signals are processed into high resolution and high frame rate video signals, the on screen display menu data is overlaid. The above are only different sequences of the overlaying operations, and can both present high definition pictures with on screen display menu data on the display screen 20; therefore, the above overlaying sequences are not intended to limit the present invention.

The operation mode of the audio and video player 10 disclosed by the embodiment of the present invention will be illustrated hereinafter through a specific implementation manner.

After receiving the audio and video signals from the main signal source 30, the processor 110 of the audio and video player 10 transmits the main audio signals from the main signal source 30 to the audio system 40 through an I2S audio bus; and transmits the main video signals from the main signal source 30 to the video format conversion bridge chip 120 through the first video format output interface 112. During this process, the processor 110 may also produce corresponding on screen display menu data through the on screen display menu function module 111 according to the external operation instruction received, and optionally transmit the on screen display menu data to the data conversion chip 130 directly; or, overlay the on screen display menu data with the main video signals, and then transmit the main video signals overlaid with the on screen display menu data to the video format conversion bridge chip 120. Moreover, during the process of transmitting the main video signals, the processor 110 optionally converts the data format of the video signals into a data format suitable for the first video format output interface 112 according to actual demands, such as HDMI, and then transmits the signals to the video format conversion bridge chip 120 through the first video format output interface 112. Therefore, the main video signals transmitted by the processor 110 to the video format conversion bridge chip 120 may either be the main video signals overlaid with on screen display menu data, or the main video signals not overlaid with on screen display menu data.

The video format conversion bridge chip 120, after receiving the foregoing main video signals through the first video format input interface 121, converts the data format of the main video signals into data format V-by-One from data format HDMI, and then transmits the converted main video signals to the motion compensation frame rate converter 140 through the second video format output interface 123.

Next, after receiving the converted main video signals through the second video format input interface 141, the motion compensation frame rate converter 140 conducts motion estimation, motion compensation and frame rate conversion on the converted main video signals, so that the converted main video signals are processed into high resolution and high frame rate video signals. Then, the high resolution and high frame rate video signals are transmitted to the display screen 20 to play, thus presenting high definition pictures on the display screen 20.Wherein, if the main video signals outputted from the processor are the main video signals not overlaid with the on screen display menu data, on screen display menu data overlaying operation may be conducted on the main video signals by the motion compensation frame rate converter 140 to finally present the high definition pictures having on screen display menu data on the display screen after the on screen display menu data is transmitted to the motion compensation frame rate converter 140 through the data conversion chip 130.

Furthermore, when the audio and video signals inputted into the audio and video player 10 are from an external signal source 50 of such an audio and video output equipment like a DVD player or a set top box, the audio and video player 10 receives the external audio and video signals through the external audio and video input interface 124 of the video format conversion bridge chip 120. Wherein, the external audio signals from the external signal source are transmitted to the processor 110 through the audio output interface 125 of the video format conversion bridge chip 120, and then provided to the audio system 40 to play through the processor 110. While the data format of the external video signals from the external signal source (i.e., the video signals in the audio and video signals of the external signal source) is converted through the video format conversion bridge chip 120, for example, converted into data format V-by-One from data format HDMI, so that the data format is consistent with the output format of the second video format output interface 123, and then the converted external video signals are transmitted to the motion compensation frame rate converter 140 through the second video format output interface 123, to facilitate conducting high resolution and/or high frame rate processing. For example, if the resolution of the external video signals are maximum resolution, resolution processing is not conducted in this case; on the contrary, the resolution of the video signals is processed into maximum resolution if the resolution is not maximum resolution. For example, when the inputted external video signals have 4K*2K resolution, then the video signals are not processed; if the inputted external video signals have 1080P resolution only, then the external video signals are processed to have 4K*2K resolution.

Wherein, during the process of transmitting the external video signals from the video format conversion bridge chip 120 to the motion compensation frame rate converter 140, if the processor 110 receives an external operation instruction to produce corresponding on screen display menu data through the on screen display menu function module 111 , the data conversion chip 130 receives the on screen display menu data through the on screen menu input interface 134 and converts the data format, so that the data format of the on screen display menu data is converted into the data format that can be received by the menu data input interface 142 of the motion compensation frame rate converter 140, and then the on screen display menu data is transmitted to the motion compensation frame rate converter 140 through the on screen menu output interface 133. It is to be understood that if the initial data format of the on screen display menu data is consistent with the data format that can be received by the menu data input interface 142 of the motion compensation frame rate converter 140, the operation of converting the data format can be omitted.

Then, the motion compensation frame rate converter 140 can namely overlay the received on screen display menu data with the external video signals; or overlay the received on screen display menu data with the external video signals which are processed into high resolution and high frame rate video signals already, and then transmit to the display screen 20.

It may be understood by those having ordinary skills in the art that the all or a part of steps of implementing the foregoing embodiments may be finished through relevant hardware instructed by a program. The program may be stored in a mobile device or a computer readable storage medium, and the program while performing includes the steps of the foregoing embodiments of the method. While the forementioned storage medium includes: various mediums that can store program codes such as ROM, RAM, magnetic disk or optical disk.

It should be finally noted that all the embodiments above are only configured to explain the technical solutions of the present invention, but are not intended to limit the protection scope of the present invention. Although the present invention has been illustrated in detail according to the foregoing embodiments, those having ordinary skills in the art should understand that modifications can still be made to the technical solutions recited in various embodiments described above, or equivalent substitutions can still be made to a part or whole of technical features thereof, and these modifications or substitutions will not make the essence of the corresponding technical solutions depart from the spirit and scope of the claims.

## Claims

1. An audio and video player, comprising: a processor, a video format conversion bridge chip, a data conversion chip and a motion compensation frame rate converter, wherein,
the processor, provided with an on screen display menu function module , is configured to produce on screen display menu data;
the video format conversion bridge chip, coupled to the processor and an external signal source respectively, is configured to receive and convert the data format of external video signals from the external signal source, and transmit the converted external video signals to the motion compensation frame rate converter;
the data conversion chip, coupled to the processor and the motion compensation frame rate converter respectively, is configured to receive the on screen display menu data from the processor and transmit the on screen display menu data to the motion compensation frame rate converter when the video format conversion bridge chip receives the external video signals, and optionally convert the data format of the on screen display menu data; and
the motion compensation frame rate converter, coupled between the video format conversion bridge chip and a display screen, is configured to overlay the converted external video signals and the on screen display menu data received and transmit to the display screen.

2. The audio and video player according to claim 1, wherein the processor is coupled to a main signal source, and the processor overlays main video signals from the main signal source with the on screen display menu data, and transmits to the video format conversion bridge chip, and the video format conversion bridge chip converts the data format of the main video signals or the overlaid main video signals outputted by the processor, and transmits to the motion compensation frame rate converter.

3. The audio and video player according to claim 2, wherein the motion compensation frame rate converter is configured to process the main video signals converted by the video format conversion bridge chip and the overlaid external video signals into high resolution and high frame rate video signals respectively, and transmit the signals to the display screen.

4. The audio and video player according to claim 2, wherein an on screen menu input interface and an on screen menu output interface are electrically set on the data conversion chip, and a menu data input interface is electrically set on the motion compensation frame rate converter, the on screen menu input interface is coupled to the processor, the on screen menu output interface is coupled to the menu data input interface, and the data conversion chip receives the on screen display menu data through the on screen menu input interface and transmits the on screen display menu data to the motion compensation frame rate converter through the on screen menu output interface.

5. The audio and video player according to claim 2, wherein,
a first video format output interface is electrically set on the the processor;
a second video format input interface is electrically set on the motion compensation frame rate converter; and
a first video format input interface and a second video format output interface are electrically set the video format conversion bridge chip;
wherein, the first video format input interface, coupled to the first video format output interface, is configured to receive the video signals of the main signal source, and the second video format output interface, coupled to the second video format input interface, is configured to transmit the converted main video signals and/or external video signals to the motion compensation frame rate converter.

6. The audio and video player according to claim 5, wherein an external audio and video input interface which is coupled to the external signal source is electrically set on the video format conversion bridge chip, and is configured to receive the external video signals from the external signal source, and the video format conversion bridge chip converts the data format of the external video signals, and transmits the converted external video signals to the to the motion compensation frame rate converter through the second video format output interface.

7. The audio and video player according to claim 5, wherein a signal input interface and a signal output interface are electrically set on the data conversion chip, the signal input interface is coupled to the first video format output interface of the processor, the signal output interface is coupled to the first video format input interface of the video format conversion bridge chip, and the data conversion chip receives and transmits the main video signals or the overlaid main video signals to the video format conversion bridge chip respectively through the signal input interface and the signal output interface.

8. The audio and video player according to any one of claims 4 or 7, wherein the data format of the on screen menu output interface is different from the data format of the on screen menu input interface or the signal input interface, the data format of the on screen menu output interface is the same as the data format of the menu data input interface, and the data conversion chip converts the data format of the on screen display menu data, and transmits the on screen display menu data after format conversion to the motion compensation frame rate converter through the on screen menu output interface or the signal input interface.

9. The audio and video player according to any one of claims 5 to 7, wherein the data format of the first video format output interface and the external audio and video input interface is one of MHL, HDMI, LVDS, DP, EDP, MIPI DSI, TTL and combinations thereof, the data format of the first video format input interface is the same as the data format of the first video format output interface, the data format of the second video format output interface is different from the data format of the first video format output interface, and the second video format output interface and the second video format output interface are a video signal output interface and a video signal input interface with corresponding data format.

10. The audio and video player according to claim 9, wherein the data format of the second video format output interface is V-by-One.

11. The audio and video player according to claim 2, wherein the audio and video player is a TV set, wherein the main signal source is a TV signal source, a signal source from internet or a signal source downloaded from a local end, and the external signal source is an audio and video signal source of a video and audio device externally connected to the audio and video player.

12. The audio and video player according to claim 2, wherein the processor is also coupled with an audio system, wherein the processor receives the main audio signals from the main signal source and/or the external audio signals from the external signal source, and transmits the main audio signals and/or the external audio signals to the audio system, wherein an audio output interface which is coupled to the processor is electrically set on the video format conversion bridge chip, and is configured to transmit the external audio signals to the processor.
